# EUROPÄISCHE PATENTANMELDUNG

(11) **EP 4 019 440 A1**
(43) Veröffentlichungstag der Anmeldung: **29.06.2022**
(21) Anmeldenummer: 21401053.0
(22) Anmeldetag: 09.12.2021
(51) Int. Cl.: B65G 53/26, B65G 53/34, B65G 53/38, B65G 53/52

(54) **AIRLIFT**

(30) Priorität: 16.12.2020 DE 102020133793
(71) Anmelder: KREISEL GmbH & Co. KG, 02957 Krauschwitz (DE)
(72) Erfinder: Dikty, Mario, 21641 Apensen (DE); Kühler, Jan, 21279 Appel (DE)
(74) Vertreter: Haschick, Gerald

(57) **Zusammenfassung**

Der VertiFeed arbeitet nach dem Airlift-Prinzip. Er dient dem vertikalen und vertikal/horizontalem Transport. In der Ausführung vertikal/horizontal ist der erste Förderabschnitt zwingend vertikal auszuführen, erst ab einer Beschleunigungsstrecke von 20xD (D=Förderrohrdurchmesser) darf ein horizontaler Förderabschnitt folgen.

## Beschreibung

Bekannt sind Airlifte, in der erfinderischen Lösung werden sie benannt mit VertiFeed.

Der VertiFeed arbeitet nach dem Airlift-Prinzip. Er dient dem vertikalen und vertikal/horizontalem Transport. In der Ausführung vertikal/horizontal ist der erste Förderabschnitt zwingend vertikal auszuführen, erst ab einer Beschleunigungsstrecke von 20xD (D=Förderrohrdurchmesser) darf ein horizontaler Förderabschnitt folgen.

Der Aufbau des VertiFeed ist konstruktiv einfach gestaltet, was ihn attraktiv für Prozesse macht, die eine hohe Verfügbarkeit an den vertikalen pneumatischen Transport legen.

Das Funktionsprinzip ist wie folgt: Das Fördergas, in der Regel durch Gebläse bereitgestellt, strömt von unten in den VertiFeed ein. Der zylindrische Körper des VertiFeed ist nahezu mit Schüttgut gefüllt. Im Bodenbereich wird das Schüttgut fluidisiert, um einen gleichmäßigen Zulauf des Schüttgutes zum Förderrohr zu erzielen.

Das einströmende Fördergas verlässt die sogenannte Fördergasdüse mit hoher Geschwindigkeit und erfasst das der Düse zufließende Schüttgut und transportiert es in das vertikale Förderrohr.

Förderhöhen von bis zu 150 m, bei Förderleistungen bis zu 1000 t/h, können mit dem VertiFeed erzielt werden. Die Beschickung des VertiFeeds erfolgt kontinuierlich über in der Regel Luftförderrinnen.

Leistungsmerkmale:
- keine bewegten Teile, dadurch höchste Verfügbarkeit
- geringe Investitionskosten
- geringster Verschleiß
- Förderleistungen bis zu 1000 t/h
- Förderhöhen bis zu 150 m
- Standard-Betriebstemperatur < 150 °C,
   auf Anfrage bis zu 600 °C möglich
- kontinuierlicher Betrieb

### VertiFeed Abdichtprinzip:

Die Abdichtung des Förderleitungsrückdruckes zur Umgebung/zum Einlauf hin erfolgt mittels den durch die Schüttgutsäule erzeugten Druck. Dieser ist proportional der Schüttgutdichte und der Schüttgutfüllhöhe im VertiFeed. Die Gesamtbauhöhe des VertiFeeds wird somit durch die Förderleistung und den daraus resultierenden Förderleitungsrückdruck, der Erdbeschleunigung sowie durch die Schüttgutfüllhöhe definiert.

Aufgabe der Erfindung ist es, einen Airlift zu entwickeln, welcher für höhere Temperaturen einsetzbar ist.

Die Aufgabe wird erfindungsgemäß dadurch gelöst, dass der Patentanspruch 1 realisiert wird.

Dabei wurde ein Airlift so entwickelt, dass eine untere Belüftung des Airliftes über einen Belüftungsanschluss und durch ein Metallgewebe, welches einer Temperatur bis 1000 °C ausgesetzt werden kann, gegeben ist und dass der Behälter in seiner Bauausführung hochtemperaturbeständig bis zu einer Temperatur von 1000 °C ausgeführt ist.

Bei dem erfindungsgemäßen Airlift handelt es sich um ein Einschleusorgan für die pneumatische Förderung.

Der neue Stand der Technik beinhaltet, dass dieser Airlift nun bis 1000 °C eingesetzt werden kann. Das Besondere ist, dass der Behälter aus einem temperaturbeständigen Edelstahl und/oder mit einer Schamottsteinbewandung im Innenraum des Airliftes (1) hergestellt wird und dass die Belüftung des Schüttgutes am Airlift-Boden nun nicht mehr mit einem Stoffgewebe, sondern mit einem Metallgewebe realisiert wird. Damit können Temperaturen bis 1000
°C realisiert werden.

Nachfolgend wird ein Ausführungsbeispiel beschrieben, wobei drei Zeichnungen dargestellt sind.

Es zeigen die:
- Figur 1 -: die erfinderische Lösung mit dem Gewebe,

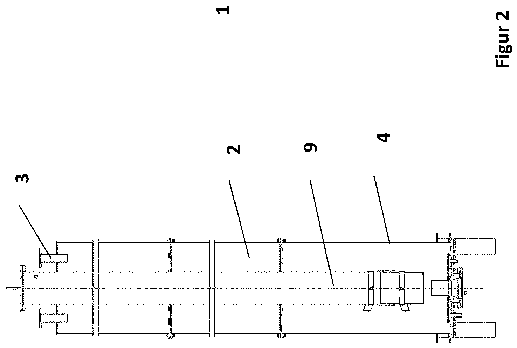

- Figur 2 -: eine Darstellung des Airliftes,
- Figur 3 -: eine Darstellung des Airliftes im unteren Bereich,
- Figur 4 -: Darstellung des Airliftes mit Schamottsteinen
- Figur 5 -: Allgemeine Darstellung des Airliftes,
- Figur 6 -: Draufsicht des Airliftes.

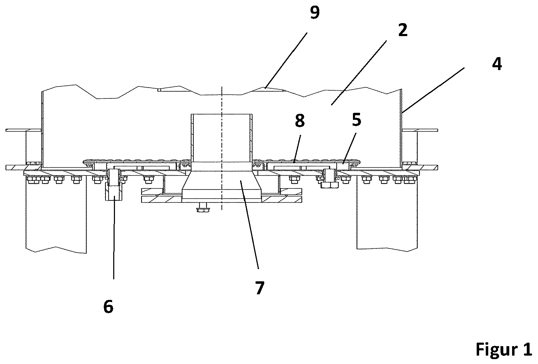

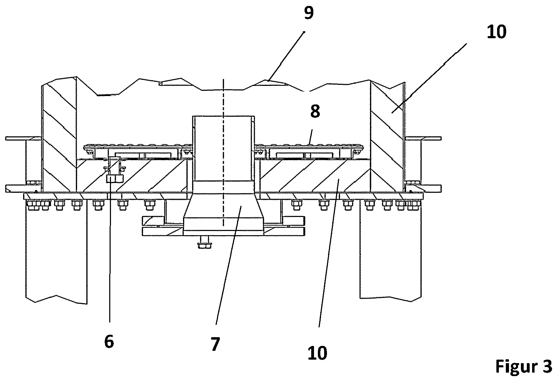

Die Figuren 1 und 3 zeigen die erfinderische Lösung mit der Anwendung des Metallgewebes (8).

Dabei ist der untere Bereich des Airliftes (1) in der Figur 3 dargestellt, welcher zusammengesetzt ist aus dem in den Bodeneinlass integrierten Metallgewebe (8) mit dem entsprechenden dazugehörigen Befestigungsrahmen (5) an dem Behälter (4). In der Mitte ist eine Düse (7) gegeben. Oberhalb des

Austritts der Düse (7) unterhalb des Behälters (4) ist das Förderrohr (9) zur Weiterleitung des Mediums ausgeführt.

Das Fördergas, i.d.R. Luft, strömt durch die Düse (7). Das einströmende Fördergas verlässt die Düse (7) mit hoher Geschwindigkeit und erfasst das der Düse (7) zufließende Schüttgut (2) und transportiert es in das Förderrohr (9).

In dem Befestigungsrahmen (5) ist das erfindungsgemäße Metallgewebe (8) integriert, über den Belüftungsanschluß (6) strömt das Fluidisiergas ein und dadurch findet die Belüftung des Schüttgutes (2) im unteren Bereich des Behälters (4) statt. Auf Grund des Metallgewebes (8) sind Temperaturen bis zu 1000 °C möglich bzw. im Zusammenhang mit dem Aufbau des Airliftes (1) mit dem Behälter (4). Für das Metallgewebe (8) werden Sintermetalle verwendet.

Erfindungsgemäß ist der Airlift (1) so ausgeführt, dass er für hohe Temperaturen bis zu 1000 °C mit dem hochtemperaturbeständigem Behälter (4) geeignet ist.

Dabei sind zwei verschiedene Arten realisierbar:
- Ausmauerung mit Schamottsteinen (10),
- Ausführung in Hochtemperaturstahl.

Erfindungsgemäß ist der Hochtemperatur-Airlift (1) durch Folgendes gekennzeichnet:
- Behälter (4) geeignet zur Anwendung von Temperaturen bis zu 1000 °C,
- Belüftung bzw. Fluidisierung über den Belüftungsanschluß (6) des Schüttgutes (2), welches über den Einlass Schüttgut (3) in den Behälter (4) gelangt, im Bodenbereich des Airliftes (1), damit das Schüttgut (2) der angeordneten Düse (7) zuströmen kann,
- Weiterhin ist es auch möglich, für das Metallgewebe (8) poröse Steine oder luftdurchlässige, temperaturfeste Strukturen zu verwenden.

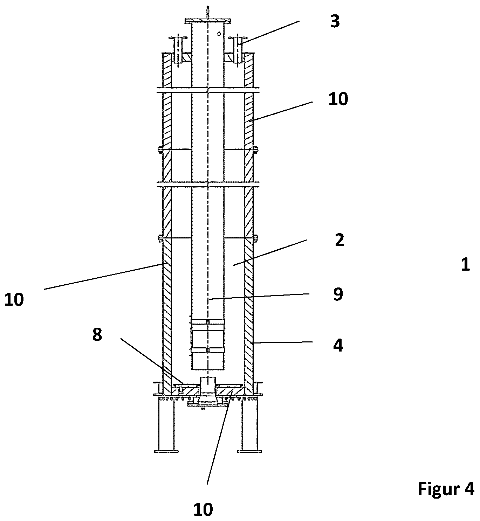

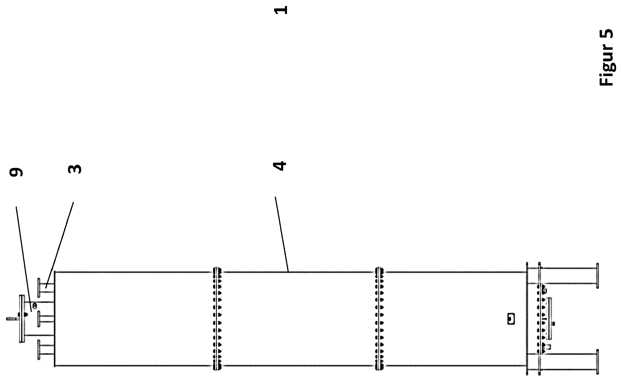

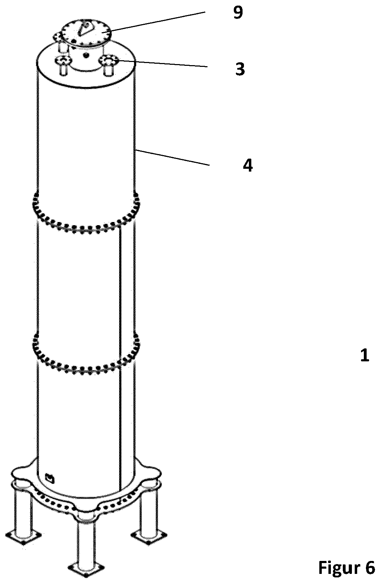

- Figur 3 und 4 sind Darstellungen des Airlifts (1) und des unteren Bereichs des Airliftes, dabei ist ersichtlich, dass eine zusätzliche Schamottsteinschicht (10) für die Hochtemperatur-Anwendung an der gesamten Innenseite des Airliftes (1) und im unteren Bereich vorhanden ist. Mit dieser Schamottstein- Schicht (10) kann der Anwendungsbereich bis zu 1000 Grad Celsius für den Airlift (1) ausgeführt werden. Die Figuren 5 und 6 zeigen eine seitliche- bzw. eine Draufsicht des Airliftes (1) als schematische Darstellung.

### Bezugszeichen

- 1: Airlift
- 2: Schüttgut
- 3: Einlass Schüttgut
- 4: Behälter
- 5: Befestigungsrahmen
- 6: Belüftungsanschluss
- 7: Düse
- 8: Metallgewebe
- 9: Förderrohr
- 10: Schamottsteine

## Patentansprüche

1. Airlift als Einschleussorgan in eine pneumatische Förderung bekannter Bauart, wobei der untere Innenraum des Airliftes von unten über ein Stoffgewebe belüftet ist und der Behälter in seiner Bauausführung hochtemperaturbeständig ist, **dadurch gekennzeichnet, dass** eine untere Belüftung des Airliftes (1) über einen Belüftungsanschluss (6) über ein Metallgewebe (8), welches einer Temperatur bis 1000 °C ausgesetzt werden kann, gegeben ist und dafür Sintermetalle verwendet werden.
